# EUROPEAN PATENT APPLICATION

(11) **EP 1 145 642 A1**
(43) Date of publication of application: **17.10.2001**
(21) Application number: 00303173.9
(22) Date of filing: 14.04.2000
(51) Int. Cl.: A23J 1/14

(54) **Treatment of plant protein extract by ion exchange to remove phytic acid and phytates**

(71) Applicant: Protein Technologies International, Inc., St Louis, Missouri 63188 (US)
(72) Inventor: Bates, Gregory A., Collinsville, Illinois 62234 (US)
(74) Representative: Tubby, David George

(57) **Abstract**

An improved method for separating phytic acid and phytates from plant protein involves contacting a clarified protein extract with an ion exchange resin, allowing phytic acid and/or phytates to bind with the ion exchange resin whereby the protein extract is depleted of phytic acid and/or phytates, and separating the protein extract which has been depleted of phytic acid and/or phytates from the ion exchange resin. In accordance with the method, only soluble proteins are contacted with the ion exchange resin. As a result, problems associated with insoluble protein accumulating on or in the ion exchange resin are eliminated, thereby providing an efficient, economical method of producing low-phytate protein isolates on a commercial scale.

## Description

This invention relates to a method for separating phytic acid and phytates from plant protein, and more particularly to a method of using ion exchange to separate phytic acid and phytates from plant protein.

Soy protein is an excellent source of amino acids for human and animal nutrition. However, phytic acid and phytates associated with soy protein reduce the bioavailability of essential minerals such as zinc by forming complexes with them. Further, it is believed that phytic acid and phytates may adversely affect the functional and nutritional value of proteins. Accordingly, many attempts have been made at developing economical methods of removing phytic acid and phytates from the more nutritional components of foods such as soy bean, canola, corn, rice, sorghum, cowpea, cassava, cocoyam and yam.

Examples of methods which have been proposed include separating phytic acid from plant materials with an aqueous acid extraction at a pH near the isoelectric point of the protein, dissociation of phytic acid from plant materials and precipitation of the phytic acid at high pH, precipitation of plant protein at low pH, and various methods involving dialysis and/or ultra filtration. These methods have provided unacceptably low yields, achieved inadequate separation, have been unacceptably complex and expensive, adversely affected the nutritive value of the protein, or have exhibited a combination of these problems. Consequently, none of these methods is believed to be acceptable for commercial scale use.

Another method which has been considered for commercial scale separation of phytic acid and phytates from plant materials involves ion exchange. It is well known that phytic acid and phytates can be separated from a protein isolate slurry by passing the protein isolate slurry through a column containing ion exchange resin. U.S. Patent No. 5,248,804 discloses such a method for separating phytate from plant protein isolate. The method involves providing a type II macroporous weak base and/or strong base anion exchange resin conditioned by exposing the resin to an agent which strips the surface of the resin of residue and converts the resin to a hydroxide form, subsequently exposing the resin to an agent which converts the resin to either a chloride form or a sulphate form, and thereafter exposing the resin to an agent which converts at least some of the strong base sites to the carbonate form and converts the weak base sites to the free base form; providing an aqueous slurry containing a source of plant protein isolate and phytate; bringing the slurry into contact with the anion exchange resin; and separating the slurry from the anion exchange resin. The slurry containing a source of plant protein isolate and phytate is prepared by adding dry protein isolate to heated water and mixing well until the slurry is smooth. The slurry is preferably heated to a temperature of from about 71°C to about 79°C.

The dry protein isolate used in the slurry disclosed in the 5,248,840 patent is a commercially available soy protein isolate manufactured by Protein Technologies International. The dry soy protein isolate is prepared by extracting soy flakes and/or soy flour with an aqueous alkaline solution (pH 9.0); separating an extract containing protein, carbohydrates, phytic acid, and phytates from insoluble flake material (fibre, hemicellulose) to form a clarified protein extract; adjusting the pH of the clarified extract to about the isoelectric point of the protein (pH 4.5) to precipitate protein; separating the precipitated protein from the extract; neutralising to pH 7.0; and drying the protein (e.g., such as by spray drying).

One problem with the process of the 5,248,840 patent is that the slurry prepared by adding the commercially available dry protein isolate to heated water contains substantial amounts of insoluble protein which will eventually cause the ion exchange column to become blocked and develop a high pressure gradient. Typically about 25% of the protein in a vegetable protein isolate such as soy protein isolate is insoluble in water. Acid precipitation of the protein from a clarified protein extract to produce the protein isolate causes some covalent bonding in the protein material. The covalent bonding in the protein isolate decreases the solubility of the protein isolate in water relative to the protein in the clarified protein extract from which the protein isolate is derived, leading to the pressure gradient problem in the ion exchange column.

Another problem with this process is that although heating the protein slurry will disperse the protein more homogeneously, heating soy protein to the temperatures disclosed in the 5,248,804 patent will denature the protein and render it less soluble. A third disadvantage with the process of U.S. Patent No. 5,248,804 is that protein isolate is added to a large quantity of water which must eventually be removed after passing through the ion exchange column. A fourth disadvantage with the process is that phytic acid and phytates become more closely associated with and bound to protein after protein is precipitated to form a protein isolate, thus making it difficult to achieve good separation. A fifth disadvantage is that, due to the relative insolubility of the protein isolate, the process can use only low amounts of protein in the slurry to be eluted through the column. Thus, upon spray drying the ion exchange treated slurry to form a low phytate isolate, very fine particles having a low density are produced because of the small amounts of protein present in the slurry. In large commercial scale applications therefore, a very substantial portion of the product would be lost during drying because of the small particle size and density. In view of the foregoing problems, the method disclosed in U.S. Patent No. 5,248,840 is believed to be too expensive and impractical for large-scale production.

U.S. Patent No. 4,428,876 discloses a method of extracting saponins and flavonoids from a leguminous plant in which a protein containing extract is formed by extracting a leguminous plant with an aqueous alkaline solution; separating the protein containing extract from insoluble plant fibrous materials; applying the extract on a non-polar or slightly polar adsorbent resin to adsorb the saponins and flavonoids on the resin; and eluting the saponins and flavonoids from the resin with a polar solvent. The 4,428,876 patent does not disclose separating and recovering a low phytate/phytic acid content protein material by ion exchange, and, indeed would not be effective to separate phytic acid or phytates from the vegetable protein since a non-polar or slightly polar adsorbent resin would not be effective to adsorb the polar phytic acid or phytate moieties.

Accordingly, there remains a need for an improved method of separating phytic acid and phytates from plant materials which utilises ion exchange techniques and which avoids the various problems associated with known ion exchange techniques.

The invention provides an improved method of separating phytic acid and phytates from plant protein, which can be efficiently and economically performed on a commercial scale. The method involves separating phytic acid and phytates from plant protein by contacting a clarified plant protein extract with an ion exchange resin, allowing phytic acid and/or phytates to bind with the ion exchange resin, whereby the clarified plant protein extract is depleted of phytic acid and/or phytates, and separating the protein extract which has been depleted of phytic acid and/or phytates from the ion exchange resin.

An important feature of this invention is that phytic acid and/or phytates are separated from plant protein by contacting a clarified plant protein extract, rather than an aqueous slurry of plant protein, with an ion exchange resin. By using a clarified plant protein extract containing only soluble protein, rather than a slurry containing both soluble and insoluble protein, accumulation of insoluble protein on the ion exchange resin is avoided. Consequently, the method of this invention can be employed on a commercial scale without frequent problems associated with blockage of the ion exchange column and high pressure gradient across the ion exchange column.

The method of this invention also eliminates the costly step of dewatering a treated protein slurry. Accordingly, the energy cost associated with removing water, and problems associated with the subsequent treatment of a large waste stream are eliminated. In accordance with the process of this invention, water is not added or removed which is not already present in the clarified protein extract.

Another important advantage with the process of this invention is that phytic acid and phytates are more easily removed prior to acid precipitation. Phytic acid and phytates become more closely associated with and bound to protein after the protein is precipitated to form a protein isolate. Known methods for removing phytates and phytic acid from plant materials using ion exchange resins have involved removal of phytates and phytic acid after a protein isolate has been formed by acid precipitation, whereas the process of the invention involves removing phytates and phytic acid before formation of a protein isolate by acid precipitation. Accordingly, the process of the invention is capable of achieving better separation of phytic acid and phytates from plant materials than previously known processes involving the use of ion exchange resins.

Clarified plant protein extracts are formed by extracting a plant material containing plant protein with an aqueous solution having a pH above the isoelectric point of the protein, preferably an aqueous alkaline solution, to solubilise the protein material. The liquid extractant containing the solubilised protein material is then separated from insoluble plant matter such as cellulose and other plant fibres to form a clarified extract of the protein material.

In a most preferred embodiment, a clarified soy protein extract is prepared for use in the method of the present invention. Commercially available soy flour, soy meal, soy grit, or most preferably defatted soy flakes are utilised as the starting material. Preferably the soy material has been treated with a sulphite such as sodium sulphite for improved flow characteristics and improved microbial control. The soy material is extracted with an aqueous solution having a pH of from about 6 to about 11, preferably an aqueous sodium hydroxide solution having a pH from about 8 to about 11. The weight ratio of the extractant to the soy material is from about 3:1 to about 20:1, and preferably is from about 8:1 to about 16:1. A clarified extract is separated from the insoluble materials such as soy fibre and cellulose by filtration or by centrifugation and decantation of the supernatant extract from the insoluble materials.

In accordance with the method of this invention, the clarified extract solution is eluted through an ion exchange resin to remove phytic acid and phytates. It is preferred that a type II macroporous strong base anion exchange resin be utilised for this process, although a weak base resin may be used. As used herein, a type II strong base anion exchange resin is defined as a quaternary ammonium type of resin in which the four substituents of the nitrogen atom are an ethanol group, two methyl groups, and a polymeric benzyl group. Commercially available type II strong base anion exchange resins include IRA 910 available from Rohm & Haas, Independence Mall West, Philadelphia, PA 19105; Dowex 22 available from Dow Chemical USA, 2040 Willard H. Dow Center, Midland, MI 48674; and Ionac A651 available from Sybron, Sybron Chemical Division, Birmingham Road, Birmingham NJ 08011. A commercially available weak base anion exchange resin which may be used in the process of the present invention is Duolite A-7 from Rohm & Haas.

Suitable methods for conditioning the anion exchange resin are set forth in U.S. Patent No. 5,248,804. A preferred technique for conditioning the anion exchange resin involves exposing the resin to an agent which strips the surface of the resin of residue and converts the resin to a hydroxide form, thereafter exposing the resin to an agent which converts the resin to either a chloride form or a sulphate form, and thereafter exposing the resin to an agent which converts at least some of the strong base sites to the carbonate form and converts weak base sites to the free base form. A suitable agent which strips the surface of the resin of residue and converts the resin to a hydroxide form is sodium hydroxide. A suitable agent which converts the resin to a chloride form is hydrochloric acid, preferably a 1% solution of hydrochloric acid, and a suitable agent to convert the resin to a sulphate form is sulphuric acid, preferably 1% sulphuric acid. Examples of suitable agents which convert at least some of the strong base sites to the carbonate form and convert weak base sites to the free base form include sodium carbonate, sodium bicarbonate and ammonium hydroxide.

Another advantage with the method of the present invention is that the final phytate/phytic acid depleted plant protein can be more easily retrieved than the final product of previously known methods. Due to the insolubility of the protein isolate used in known methods of separating phytic acid and phytates from protein, the amount of protein in the slurry which is eluted through the column must be relatively low. As noted previously, upon spray-drying the ion exchange treated slurry to form a low-phytate isolate, very fine particles having a low density are produced when using previously known methods because of the small amounts of protein which are present in the slurry. In industrial applications using the known method for removing phytic acid and phytates from plant materials, a substantial portion of the product can be lost during the drying process on account of the small particle size and density of the spray-dried product. In contrast, with the method of this invention, the protein may be recovered in substantial quantities without loss of product on account of particle size or density by performing a standard acid precipitation of protein from the extract, or by spray-drying the solution of soluble protein.

Most preferably, the low-phytate protein prepared in accordance with the method of this invention is recovered by standard acid precipitation and drying processes. The low-phytate clarified extract solution eluted from the anion exchange column is preferably adjusted to a pH at the isoelectric point of the protein (e.g., pH 4-5, preferably 4.4-4.6 for soy protein) to precipitate the protein. The precipitated protein may then be separated by conventional means such as filtration or centrifugation from the liquid portion of the extract to form a low-phytate protein isolate. Optionally, it may be desirable to neutralise the recovered low-phytate protein isolate to a pH of about 7. Thereafter, the protein isolate may be dried employing conventional techniques.

Alternatively, the protein may be recovered by spray-drying the phytate/phytic acid depleted extract. Since the protein is soluble in the extract, the protein can be present in the extract in substantial amounts without blocking the ion exchange column and creating a high pressure gradient across the column. As a result, spray-drying the ion exchange treated extract produced in accordance with the method of this invention will produce product particles having a higher density and/or larger particle size than that of a slurry of soluble and insoluble protein. Therefore, less product is lost during spray-drying.

Because the method of this invention involves passing a clarified protein extract (i.e., a solution containing only soluble protein) through a column containing an ion exchange resin, rather than passing a slurry containing both soluble and insoluble protein through an ion exchange column, the method of this invention is capable of achieving higher product yields and higher production rates, whereby low phytic acid and low phytate protein isolates can be produced more economically.

## Claims

1. A method for separating phytic acid and phytates from plant protein in which a clarified plant protein extract is contacted with an ion exchange resin, phytic acid and/or phytate is allowed to bind with the ion exchange resin whereby the clarified plant protein extract is depleted of phytic acid and/or phytates, and the depleted extract is separated from the ion exchange resin.

2. A method according to Claim 1, in which said plant protein is soy protein.

3. A method according to Claim 1 or Claim 2, in which the pH of the extract separated from the ion exchange resin is adjusted to about the isoelectric point of the protein, so as to precipitate the protein.

4. A method according to Claim 3, in which the plant protein is soy protein and the pH is adjusted to a value of from about 4 to about 5 to precipitate the protein.

5. A method according to Claim 3 or Claim 4, in which the precipitated protein is separated from a liquid portion of the extract.

6. A method according to Claim 5, in which the precipitated protein separated from the liquid portion of the extract is neutralised to a pH of about 7.

7. A method according to Claim 5 or Claim 6, in which the precipitated protein separated from the liquid portion of the extract is dried.

8. A method according to any one of the preceding Claims, in which the ion exchange resin is an anion exchange resin.

9. A method according to Claim 8, in which the anion exchange resin is a type II macroporous anion weak base or strong base anion exchange resin.

10. A method according to any one of the preceding Claims, in which, prior to contacting the clarified protein extract with the ion exchange resin, the ion exchange resin is conditioned by exposing the resin to an agent which converts the resin to a hydroxide form, the hydroxide form resin is treated with an agent which converts the hydroxide form resin to a chloride or sulphate form resin, and the chloride or sulphate form resin is treated with an agent which converts at least some strong base sites of the resin to a carbonate form.

11. A method according to any one of the preceding Claims, in which said clarified plant protein extract contains solubilised protein and is substantially free of insoluble protein material.

12. A method according to Claim 11, in which the clarified plant protein extract is prepared by extracting a plant material containing plant protein with an aqueous solution having a pH above the isoelectric point of the protein to solubilise the protein; and thereafter separating the liquid extractant containing the solubilised protein from insoluble plant matter.
